# EUROPEAN PATENT SPECIFICATION

(11) **EP 2 241 521 B1**
(45) Date of publication and mention of the grant of the patent: **03.10.2012**
(21) Application number: 10156567.9
(22) Date of filing: 15.03.2010
(51) Int. Cl.: B65G 53/46

(54) **Rotor configuration for a rotary valve**
Rotorkonfiguration für ein Drehventil
Configuration de rotor pour une soupape rotative

(30) Priority: 18.03.2009 US 161401 P
(43) Date of publication of application: 20.10.2010
(73) Proprietor: Pelletron Corporation, Lancaster, PA 17601 (US); Taiwan Control Valve Corporation, Taoyuan Hsien 326 (TW)
(72) Inventor: Chuang, Shao Lu, 326, Taoyuan County (TW); Schneider, Heinz, Lancaster, PA 17601 (US)
(74) Representative: Messulam, Adam Clive

(56) References cited:
- EP-A2- 1 110 885
- DE-B- 1 013 575
- DE-B- 1 085 814
- FR-A- 1 242 592
- US-A- 2 084 764
- US-A- 5 772 081

## Description

### FIELD OF THE INVENTION

The invention disclosed in this application is directed generally to a rotary valve used to input particulate material into a pneumatic conveying system, and particularly to a rotor configuration that reduces air leakage across the individual rotor vanes which results in less air consumption caused by air leaking past the rotor and further results in an improved operating efficiency measured by increased capacity.

### BACKGROUND OF THE INVENTION

Rotary valves are well known in the art as a mechanism for introducing a flow of particulate material into a pressurized pneumatic conveying system. The pneumatic conveying system utilizes a flow of pressurized air through a pipe or tubular conduit to establish a fluidized flow of the particulate material fed into the conduit to move the particulate material from one place to another. The rotary valve has a housing defining an opening at the top for the introduction of particulate material and an opening at the bottom to discharge the particulate material flowing through the rotary valve into the pneumatic conveying system conduit. The housing rotatably supports an internal rotor for movement about a transverse axis of rotation. The rotor is formed with a plurality of radially extending vanes that define chambers therebetween.

Each respective chamber receives a supply of particulate material when rotated to be opened to the upper inlet opening and then deposits the particulate material into the conduit when the chamber is rotated around the axis of rotation and opens to the conduit. The interior of the housing is, therefore, formed in a generally cylindrical shape so that the outer tips of the radially extending vanes pass in close proximity to the interior cylindrical surface of the housing to restrict leakage of pressurized air from the conduit around the rotor.

Conventional manufacturing methods for the rotary valve utilize welding techniques to secure the individual vanes to a central shaft that corresponds to the axis of rotation of the rotor, as for example in EP 1 110 885. Conventional welded rotors are machined and grinded to proper tolerances for utilization in a rotary valve housing, but welding techniques have limitations with respect to the number of vanes that can be welded onto a central shaft. Thus, the number of vanes on the rotor are limited from a practical sense to the space needed at the central shaft to affect the welding. Limiting the number of vanes results in limiting the number of pockets between the vanes for the transportation of the particulate material around the rotor from the supply hopper to the pneumatic conduit. In order to add more pockets in the rotor structure, the depth of the pockets from the other tip of the vanes would have to be reduced to provide sufficient room to affect the welding process. If the depth of the pockets is decreased, the volume of the pockets is decreased, resulting in lower capacity for the rotary valve.

Air leakage in rotary valves is a common problem. If the rotary valve has a severe air leakage problem, the leaking of air around the rotor into the supply hopper restricts the movement of the particulate material into the pockets of the rotor. For light particulate material, this restriction on movement into the rotor pockets can be a severe problem. Accordingly, the air leakage problem will reduce operating efficiency because the pockets in the rotor will not be able to fill completely. Furthermore, less air leakage means that the air compressor supplying pressurized air for the pneumatic conveying system has to produce sufficient quantities of air into the pneumatic conduit to make up for the air loss through the rotary valve. By substantially reducing the air leakage, the size of the compressor can be reduced and less energy can be utilized, saving in operating costs.

Air leakage problems can be reduced by increasing the thickness of the vanes as the corresponding increased width of the tips helps to restrict the passage of air around the vanes. The leakage problem can be reduced by increasing the number of vanes, which is a conventional solution to the air leakage problem. Simply increasing the number of vanes to reduce the air leakage problem results in reducing the depth of the pockets and the overall capacity of the rotary valve to accommodate the welding techniques. Increasing vane thickness can also be accomplished when utilizing welding techniques to manufacture the rotor to reduce air leakage problems; however, the increased thickness in the vanes results in a corresponding reduced size in the chambers located between the radially extending vanes and lowers the operating capacity of the rotary valve in the feeding of particulate material into the conduit. Other examples of rotary valves can be found in documents DE 1 085 814, US 2 084 764, FR 1 242 592, US 5 772 081 or DE 1 013 575.

Accordingly, it would be desirable to provide a rotary valve that reduces air leakage without detracting from the operating capacity of the valve and without increasing the power consumption thereof. It would also be desirable to provide a rotary valve configuration that is conducive to manufacturing techniques other than welding.

According to the present invention, there is provided a rotary valve as set forth in claims 1 to 8 of the appended claims.

### SUMMARY OF THE INVENTION

It is an object of this invention to overcome the aforementioned disadvantages of the prior art by providing a rotary valve having a rotor construction that will reduce air leakage through the rotary valve during operation thereof.

It is another object of this invention to provide a rotary valve having a rotor configuration that includes flared tips at the distal ends of the vanes of the rotor.

It is a feature of this invention that the rotor is configured with flared tips that move along the cylindrical surface of the valve housing.

It is an advantage of this invention that the rotor having flared tips increases air leakage resistance during operation of the rotary valve to meter particulate material into a pneumatic conveying system.

It is another feature of this invention that the thickness dimension of the flared tips is approximately twice the thickness dimension of the vane extending between the flared tip and the central hub.

It is another advantage of this invention that the rotor can be formed through a precision casting process.

It is still another feature of this invention that the flared tip of each vane extends toward the direction of rotation of the rotor within the valve housing, such that the trailing side of the vane is linear to the terminus of the flared tip.

It is still another advantage of this invention that the precision casting process will enable the rotor to be constructed with a larger number of radially extending vanes than can be constructed using welding techniques for the manufacturing process.

It is yet another advantage of this invention that the wider surface area of the flared tip adjacent the interior surface of the valve housing restricts the passage of pressurized air from the pneumatic conveying system around the flared tip.

It is yet another feature of this invention that the valve housing incorporates a release port extending across substantially the entire length of the pocket formed between adjacent rotor vanes to provide a release of the pressurized air trapped in the pocket with the discharge of the particulate material from the pocket into the pneumatic conveying system.

It is a further advantage of this invention that the elongated release port provides a more complete release of the air pressure within the pocket than is known from conventional single round port release ports.

It is still a further advantage of this invention that the elongated release port provides an enhanced operating efficiency for the rotary valve.

It is a further object of this invention to provide a rotary valve that is operable to meter the flow of particulate material into a pneumatic conveying system, which is durable in construction, inexpensive of manufacture, carefree of maintenance, facile in assemblage, and simple and effective in use.

These and other objects, features and advantages are accomplished according to the instant invention by providing a rotary valve for metering the flow of particulate material from a supply source into the air stream of a pneumatic conveying system that includes a central rotor manufactured through a precision casting process. The rotor is formed with a plurality of radially extending vanes terminating in tips that are flared circumferentially into the leading side of the vane to provide a flared vane tip that is preferably at least twice the thickness of the vane itself. The valve housing is formed with an elongated release port that has an overall length approximately equal to the length of the pockets formed between adjacent vanes to provide a more complete release of pressurized air from the pocket after the particulate material has been dropped into the pneumatic conveying system. The angled leading edge of the flared tips provides a less aggressive engagement with the particulate material to reduce damage thereto.

### BRIEF DESCRIPTION OF THE DRAWINGS

The advantages of this invention will become apparent upon consideration of the following detailed disclosure of the invention, especially when taken in conjunction with the accompanying drawings wherein:

Fig. 1 is a front elevational view of a rotary valve incorporating the principles of the instant invention, the supply hopper and the conduit of the pneumatic system being shown in phantom connected to the rotary valve;

Fig. 2 is an exploded perspective view of the rotary valve shown in Fig. 1;

Fig. 3 is an exploded perspective view of the rotor assembly positioned internally within the rotary valve;

Fig. 4 is an enlarged cross-sectional perspective view of the rotor corresponding to lines 4 - - 4 of Fig. 3 to provide a better view of the shape of the tips of the radially extending vanes thereof;

Fig. 5 is an enlarged elevational of the valve cover rotatably supporting the rotor assembly for rotational movement within the interior of the rotary valve housing;

Fig. 6 is a cross-sectional view of the rotor, corresponding to the perspective cross-sectional view of Fig. 4, to show an elevational view of the rotor configuration; and

Fig. 7 is an enlarged detail view of a representative vane on the rotor.

### DETAILED DESCRIPTION OF THE PREFERRED EMBODIMENT

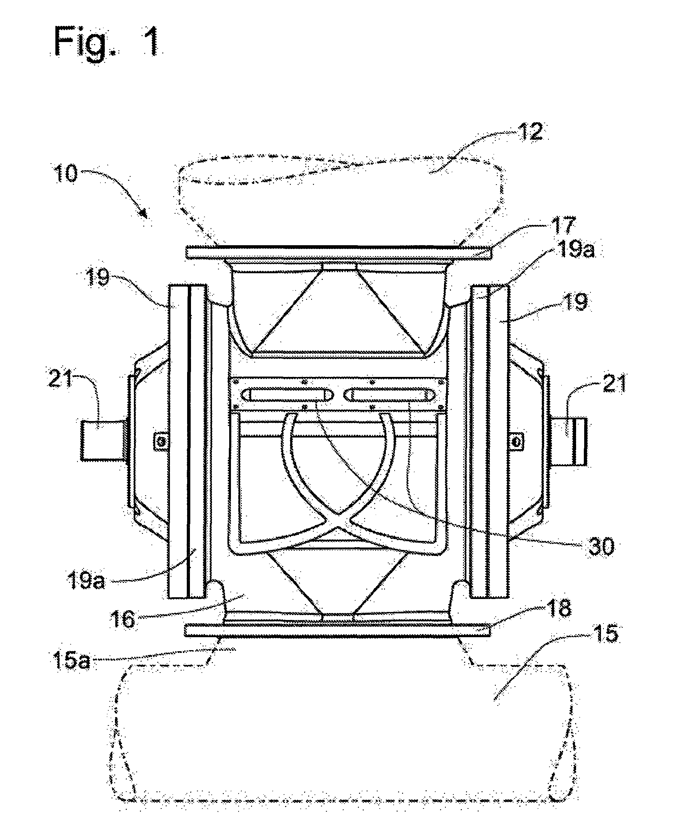

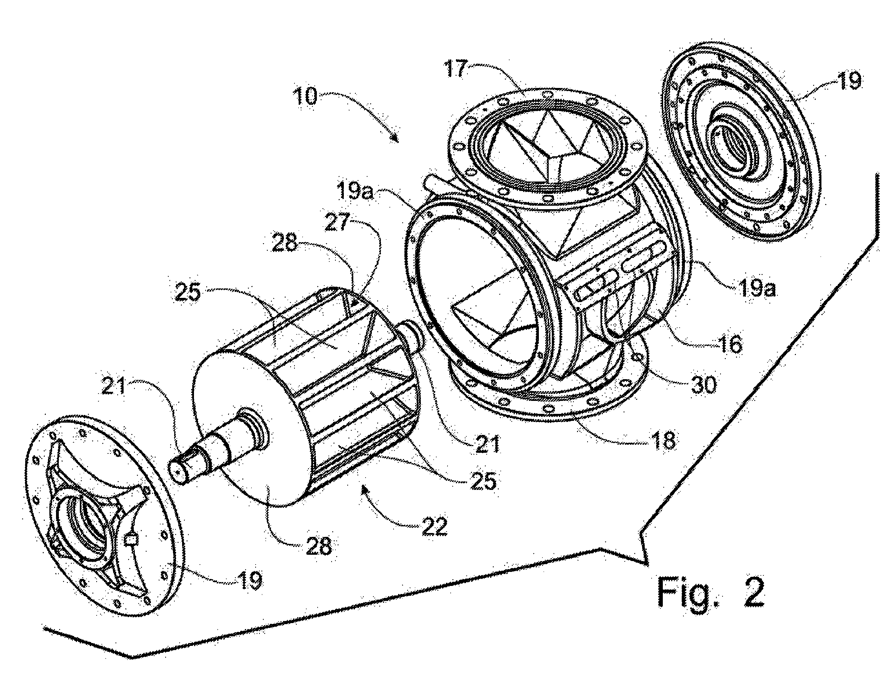

Referring to Figs. 1 and 2, a rotary valve incorporating the principles of the instant invention can best be seen. The rotary valve 10 is operably positionable between a supply hopper 12 providing a supply of particulate material, such as plastic pellets and the like, to be fed into the conduit 15 of a pneumatic conveying system to move the particulate material to a remote location serviced by the pneumatic conveying system. The purpose of the rotary valve 10 is to meter the flow of particulate material into the conduit 15 in a manner that the pressurized air within the pneumatic conveying system is retained within the conduit to provide a fluidized flow of the particulate material to the remote location. The rotary valve 10 accomplishes this function through the operation of an interior rotor assembly 20 that is formed with radially extending vanes 25 that define chambers or pockets 27 between the vanes 25 to receive the particulate material from the supply hopper 12 and move the particulate material to the conduit 15. The close proximity of the tips 26 of the vanes 25 to the mating interior surface of the housing 16, as well as the enlarged width of the tips 26 relative to the vanes 25, restricts the escape of pressurized air from the conduit 15 past the rotor assembly 20.

The housing 16 is formed in a generally cylindrical shape to support the rotational movement of the internal rotor assembly 20, as will be described in greater detail below. The housing 16 is formed with a mounting flange 17 at the top of the cylindrically-shaped housing 16 to permit the supply hopper 12 to be coupled thereto so that particulate material will be efficiently fed into the rotary valve 10. The housing 16 is also formed with a mounting flange 18 at the bottom of the cylindrically-shaped housing 16 to be coupled to an infeed opening 15a in flow communication with the top of the conduit 15 so that particulate material can flow by gravity from the filled pockets 27 into the pressurized conduit 15 of the pneumatic conveying system. The opposing sides of the cylindrically-shaped housing 16 are also formed with mounting flanges 19a that allow the coupling of bearing caps 19 that support respective bearings (not shown) that rotatably support the central shaft 21 of the rotor assembly 20.

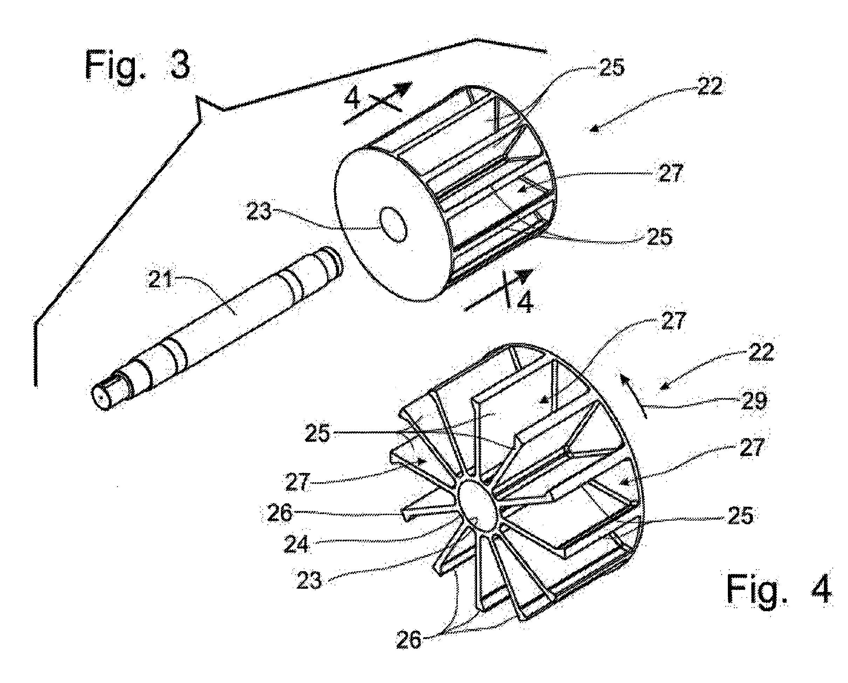

The rotor assembly is best seen in Figs. 2 - 7 and includes a rotor 22 mounted on a central shaft 21, as will be described in greater detail below. Rather than form the rotor 22 and shaft 21 as a single integral member through conventional welding techniques, the instant invention forms the rotor 22 as a precision casting that has a central opening 23 passing therethrough for the insertion of the central shaft 21. The shaft 21 is preferably formed of high tension steel to minimize deflection under pressure. The rotor 22 is pressed onto the central shaft, and rotatably secured thereto with appropriate keys (not shown) so that the rotor assembly 20 rotates as a single unit.

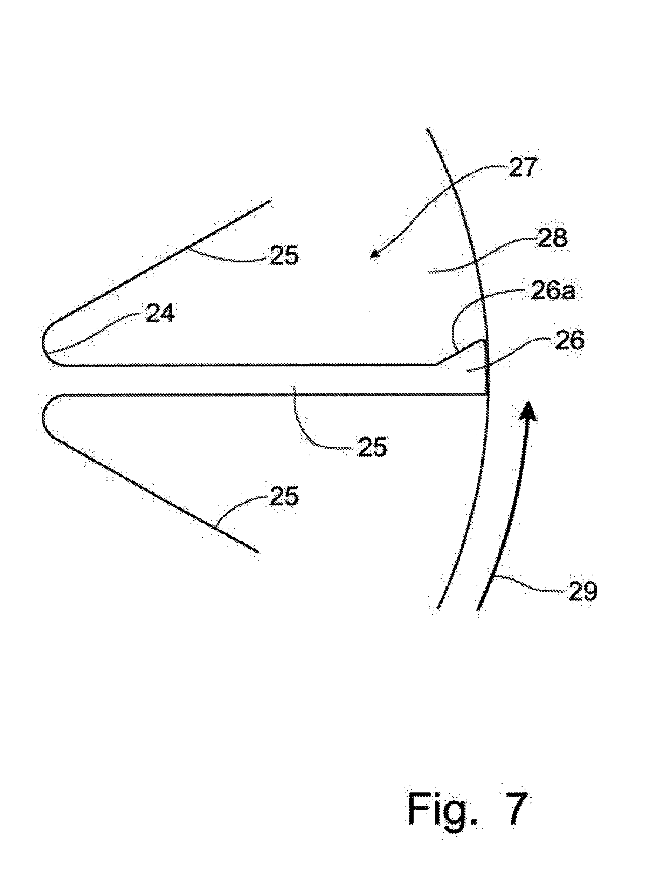

The rotor 22 is cast with a central hub 24 defining the central opening 23 for the passage of the shaft 21 from which vanes 25 extend radially. The vanes 25 have a uniform length and terminate in a tip 26 that is flared with respect to the radially extending vane 25, as is best seen in Fig. 7. Because the rotor 22 is formed as a precision casting, the vanes 25 can be kept with a minimal thickness and in various numbers, sufficient to be rigid so as not to deflect during rotation of the rotor 22 or under the pressure of the compressed air within the pockets 27. The tips 26, however, can be flared to present an outer surface that is much wider than the nominal thickness of the corresponding vane 25 formed through casting procedures. Preferably, the tips 26 have a thickness that is at least twice the corresponding thickness of the vanes 25. The close proximity of the wider tip 26 against the interior surface of the housing 16 restricts the passage of pressurize air around the vane tips 26, at least more so than would be found with a vane tip 26 that is substantially as wide as the nominal thickness of the vane 25. The resulting configuration of the rotor 22 provides the air leakage resistance that would be obtained with a conventionally constructed rotor assembly 20 having much thicker and a greater number of vanes 25.

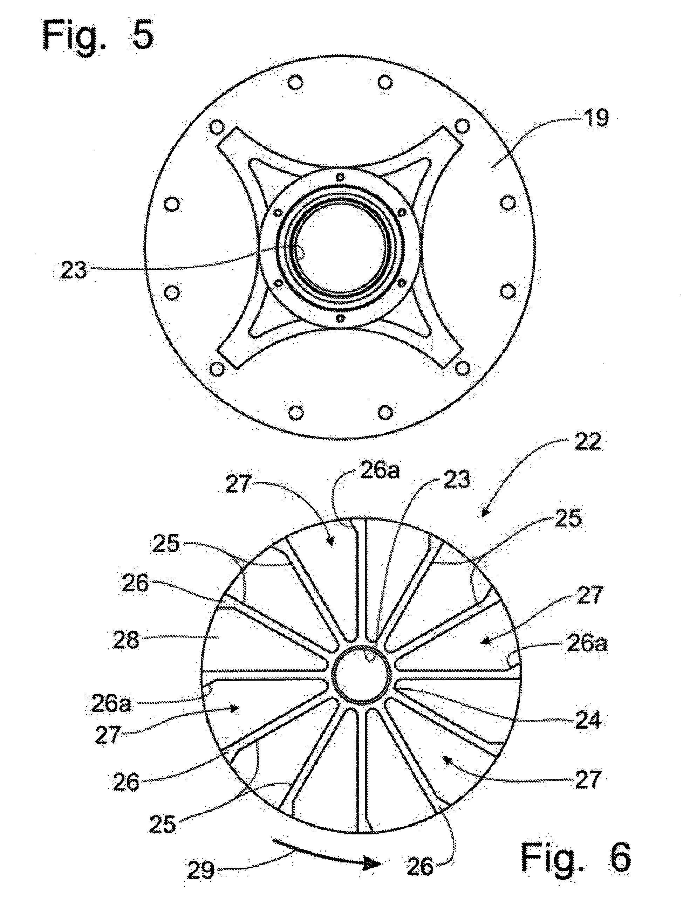

To further support the radially extending vanes 25, the rotor casting has attached thereto an end plate 28 that can be separately welded onto the opposing ends of the rotor casting, attaching the vanes thereto, or as part of the precision casting. The support of the respective opposing ends of the vanes 25 at the end plates 28 help stabilize the vanes 25 and increase rigidity in the rotor assembly 20. The flared tip 26 is preferably constructed such that the increased width of the tip 26, compared to the thickness of the corresponding vane 25, projects only from one side of the vane 25, as is best seen in Figs. 6 and 7. As a result, the opposing side of the vane tip 26 is a linear extension of the body of the vane 25. Preferably, the rotor assembly 20 is rotated about the transverse axis of rotation defined by the central shaft 21 in a manner that the straight side of the vane tip 26 is trailing in the rotation of the vane, with the flared side of the tip 26 leading, as is reflected in the directional arrow 29 showing the direction of rotation of the rotor 22 in Figs. 6 and 7. The sloped leading edge 26a of the flared vane tip 26 is less aggressive than a rectangularly-shaped vane tip as the vane tip 26 approaches the edge of the opening of the housing 16 in flow communication with a material supply hopper 12 which helps to prevent damage to the particulate material being metered by the rotary valve 10.

The rotation of the rotor assembly 20 conveys the particulate material received from the supply hopper 12 when the pocket 27 is rotated to the top position to receive particulate material from the supply hopper 12. The pocket 27 is then rotated about the central shaft 21 until the pocket 27 opens into the pneumatic conduit 15 where the particulate material drops by gravity into the conduit 15. Once the pocket 27 is opened to the conduit 15, the higher air pressure present in the pneumatic conduit 15 fills the emptied pocket 27 with air. Further rotation of the pocket back toward the top position to receive another supply of particulate material from the supply hopper 15 traps that quantity of high pressure air in the emptied pocket against the interior surface of the rotor.

A release port 30 is built into the housing to be in communication with the pockets 27 as they rotate from the bottom position to the top position. The release port 30 is preferably coupled to a conduit (not shown) that connects the release port 30 to the supply hopper 12 above the rotary valve 10 to release the air pressure from being trapped in the pocket 27 to being fed into the supply hopper 12 to urge particulate material down into the open pocket 27 at the top position. Without the release port 30 the high pressure air in the pocket 27 would continue around to the top position and release into the supply hopper 12 which would urge the particulate material away from the pocket and limit the flow of particulate material into the pocket 27 to be conveyed into the pneumatic conduit 15. In the rotary valve 10 incorporating the principals of the instant invention, the release port 30 preferably extend across substantially the entire width of the pockets 27, as opposed to conventional release ports which is simply a single round port in the middle of the housing 16. As a result, the release port 30 provides a more complete release of the air pressure within the pockets 27 rotating toward the top position and, thus, increases operating efficiency and capacity.

## Claims

1. A rotary valve comprising:
a housing (16) having a inlet opening (12) for receiving particulate material into the housing and an outlet opening (15) for discharging said particulate material from the housing, said housing defining a generally cylindrical interior chamber between said inlet and outlet openings;
a rotor assembly (20) rotatably supported within said interior chamber, said rotor assembly including a central hub (24) having a plurality of vanes (25) extending radially therefrom, each said vane having a body and terminating in a flared tip (26), the body being of uniform thickness between said central hub and the corresponding said tip, said tip being constructed such that the gradually increasing width of the tip, compared to the thickness of the corresponding vane, projects only from one side of the vane.

2. The rotary valve of claim 1, wherein the thickness dimension of said flared tip is approximately twice the thickness dimension of the corresponding vane extending between said central hub and said flared tip.

3. The rotary valve of claim 1 or 2, wherein said rotor member includes an end plate at the opposing ends thereof supporting the corresponding respective ends of each said vane.

4. The rotary valve as claimed in any of the preceding claims, wherein said rotor assembly is rotatable about said axis of rotation in a direction that places the flared side of said tips in leading relationship to the opposing linearly extending side of said tip.

5. The rotary valve as claimed in any preceding claim, wherein the flared side of said tips has a sloped leading edge.

6. The rotary valve of any preceding claim, wherein said housing is formed with an elongated release port to allow a release of pressurized air from each pocket formed between adjacent vanes.

7. The rotary valve of Claim 6 wherein said elongated release port has a length dimension approximately equal to a corresponding length dimension of said pockets.

8. A rotary valve as claimed in any preceding claim, wherein
said rotor assembly includes a rotor member and a central shaft defining an axis of rotation for the rotational movement of said rotor assembly, and wherein said rotor member is formed by casting of the central hub and the plurality of vanes extend radially, said central hub defining a central opening through said rotor member for the passage of said central shaft, which is keyed to said rotor member so that said rotor member and said central shaft will rotate together.

## Patentansprüche

1. Drehschieber, Folgendes aufweisend:
ein Gehäuse (16), das eine Einlassöffnung (12) zum Aufnehmen von Partikelmaterial in das Gehäuse und eine Auslassöffnung (15) zum Auslassen des Partikelmaterials aus dem Gehäuse hat, wobei das Gehäuse eine allgemein zylindrische Innenkammer zwischen der Einlass- und der Auslassöffnung definiert;
eine Rotorbaugruppe (20), die drehend innerhalb der Innenkammer gestützt ist, wobei die Rotorbaugruppe eine zentrale Nabe (24) aufweist, die eine Vielzahl von Schaufeln (25) hat, die sich radial davon erstrecken, wobei jede Schaufel einen Körper hat und in einer konisch erweiterten Spitze (26) endet, wobei der Körper gleichförmige Stärke hat, wobei die Spitze derart ausgebildet ist, dass die allmählich steigende Breite der Spitze im Vergleich zu der Stärke der entsprechenden Schaufel nur von einer Seite der Schaufel zwischen der zentralen Nabe und der entsprechenden Spitze vorsteht.

2. Drehschieber nach Anspruch 1, wobei das Stärkenmaß der konisch erweiterten Spitze in etwa das doppelte Stärkenmaß der entsprechenden Schaufel, die sich zwischen der zentralen Nabe und der konisch erweiterten Spitze erstreckt, hat.

3. Drehschieber nach Anspruch 1 oder 2, wobei das Rotorelement eine Endplatte an seinen entgegengesetzten Enden hat, die die entsprechenden jeweiligen Enden jeder Schaufel stützt.

4. Drehschieber nach einem der vorhergehenden Ansprüche, wobei die Rotorbaugruppe um die Rotationsachse in eine Richtung drehbar ist, die die konisch erweiterte Seite der Spitzen in Leitbeziehung mit der sich linear erstreckenden entgegengesetzten Seite der Spitze platziert.

5. Drehschieber nach einem der vorhergehenden Ansprüche, wobei die konisch erweiterte Seite der Spitzen eine abgeschrägte Vorderkante hat.

6. Drehschieber nach einem der vorhergehenden Ansprüche, wobei das Gehäuse mit einer länglichen Freigabeöffnung ausgebildet ist, um ein Freigeben der druckbeaufschlagten Luft aus jeder Tasche, die zwischen benachbarten Schaufeln ausgebildet ist, zu erlauben.

7. Drehschieber nach Anspruch 6, wobei die längliche Freigabeöffnung ein Längenmaß hat, das in etwa gleich einem entsprechenden Längenmaß der Taschen ist.

8. Drehschieber nach einem der vorhergehenden Ansprüche, wobei
die Rotorbaugruppe ein Rotorelement und eine zentrale Welle, die eine Rotationsachse für die Rotationsbewegung der Rotorbaugruppe definiert, aufweist, und wobei das Rotorelement durch Gießen einer zentralen Nabe ausgebildet ist und sich die Vielzahl von Schaufeln radial erstreckt, wobei die zentrale Nabe eine zentrale Öffnung durch das Rotorelement für das Durchgehen der zentralen Welle bildet, die in das Rotorelement derart eingreift, dass das Rotorelement und die zentrale Welle gemeinsam drehen.

## Revendications

1. Vanne rotative comprenant :
un logement (16) ayant une ouverture d'admission (12) pour recevoir des matières particulaires dans le logement et une ouverture de sortie (15) pour rejeter lesdites matières particulaires du logement, ledit logement définissant une chambre intérieure généralement cylindrique entre les dites ouvertures d'entrée et de sortie ; un bloc rotor (20) supporté dans ladite chambre intérieure, ledit bloc rotor incluant un moyeu central (24) ayant une pluralité d'aubes (25) s'étendant radialement de celui-ci,
chacune desdites aubes ayant un corps et se terminant en une extrémité évasée (26), le corps étant d'une épaisseur uniforme entre ledit moyeu central et ladite extrémité évasée, ladite extrémité étant construite de sorte que la largeur graduellement croissante de l'extrémité, par comparaison avec l'épaisseur de l'aube correspondante, fasse saillie uniquement depuis un côté de l'aube.

2. Vanne rotative de la revendication 1, où la dimension de l'épaisseur de ladite extrémité évasée est d'environ deux fois la dimension de l'épaisseur de l'aube correspondante s'étendant entre ledit moyeu central et ladite extrémité évasée.

3. Vanne rotative de la revendication 1 ou 2, où ledit bloc rotor inclut une plaque de fond aux extrémités opposées de celle-ci supportant les extrémités respectives de chacune desdites aubes.

4. Vanne rotative telle que revendiquée dans l'une quelconque des revendications précédentes, où ledit bloc rotor est orientable autour dudit axe de rotation dans un sens qui place le côté évasé desdites extrémités sur une relation en avant par rapport au côté opposé s'étendant linéairement de chaque extrémité.

5. Vanne rotative telle que revendiquée dans l'une quelconque des revendications précédentes, où le côté évasé desdites extrémités a un bord d'attaque incliné.

6. Vanne rotative de l'une quelconque des revendications précédentes, où ledit logement est formé d'un port de dégagement pour permettre un dégagement de l'air pressurisé de chaque poche formée entre les aubes adjacentes.

7. Vanne rotative de la revendication 6, où ledit port de dégagement a une dimension de longueur à peu près égale à une dimension de longueur correspondantes desdites poches.

8. Vanne rotative telle que revendiquée dans l'une quelconque des revendications précédentes, où
ledit bloc rotor inclut un élément de rotor et un axe central définissant un axe de rotation pour le mouvement rotatif dudit bloc rotor, et où ledit élément de rotor est formé par coulage du moyeu central et la pluralité d'aubes s'étend radialement, ledit moyeu central définissant une ouverture centrale par ledit élément de rotor pour le passage dudit axe central, qui est adapté audit élément de rotor de sorte que ledit élément de rotor et ledit axe central tournent ensemble.
